# EUROPÄISCHE PATENTSCHRIFT

(11) **EP 2 334 592 B1**
(45) Veröffentlichungstag und Bekanntmachung des Hinweises auf die Patenterteilung: **15.08.2012**
(21) Anmeldenummer: 09783839.5
(22) Anmeldetag: 08.10.2009
(51) Int. Cl.: C01B 3/38, B01J 8/18, B01J 8/06

(54) **VERFAHREN UND VORRICHTUNG ZUR HERSTELLUNG VON SYNTHESEGAS AUS GASFÖRMIGEN KOHLENWASSERSTOFFEN**
METHOD AND DEVICE FOR PRODUCING SYNTHESIS GAS FROM GASEOUS HYDROCARBONS
PROCÉDÉ ET DISPOSITIF DE PRODUCTION DE GAZ DE SYNTHÈSE À PARTIR D'HYDROCARBURES GAZEUX

(30) Priorität: 08.10.2008 DE 102008050817
(43) Veröffentlichungstag der Anmeldung: 22.06.2011
(73) Patentinhaber: Tetzlaff, Karl-Heinz, 65779 Kelkheim (DE)
(72) Erfinder: Tetzlaff, Karl-Heinz, 65779 Kelkheim (DE)
(74) Vertreter: Cohausz & Florack
(86) Internationale Anmeldenummer: PCT/EP2009/063073
(87) Internationale Veröffentlichungsnummer: WO 2010/040795

(56) Entgegenhaltungen:
- WO-A1-80/01065
- CA-A1- 2 396 402
- US-A1- 2004 097 371
- US-A1- 2005 229 488
- CHARLES M. KINOSHITA, YUE WANG, JIACHUN ZHOU: "Effect of Reformer Conditions on Catalytic Reforming of Biomass-Gasification Tars" INDUSTRIAL & ENGINEERING CHEMISTRY RESEARCH, Bd. 34, Nr. 9, September 1995 (1995-09), Seiten 2949-2954, XP002568123

## Beschreibung

Die Erfindung betrifft ein Verfahren und eine Vorrichtung zur Herstellung von Synthesegas aus gasförmigen Kohlenwasserstoffen mittels allothermer Dampfreformierung mit Katalysatoren.

Angesichts immer knapper und teurer werdender Ressourcen und dem weltweit steigenden Energiebedarf, müssen alle Prozesse auf dem Gebiet der Energieumwandlung kompakter, effizienter und dezentraler werden. Das gilt insbesondere für die Erzeugung von Strom und Wärme und für den Antrieb von Fahrzeugen. So kann beispielsweise durch Umwandlung von Primärenergie in Wasserstoff und dezentraler Energiewandlung in Kraft-Wärme-Kopplung mittels Brennstoffzellen eine sehr hohe Ausbeute an Nutzenergie erzielt werden. Dabei wird etwa die Hälfte der Nutzenergie in Form von elektrischer Energie frei. Das ist deutlich mehr als heute gebraucht wird. Strom und Wärme besitzen in diesem System also nahezu den gleichen Wert. Details sind im Buch von Tetzlaff: "Wasserstoff für alle" beschrieben (ISBN 978-38370-6116-1).

Allotherme Vergasungsverfahren erzeugen ein besonders hochwertiges Synthesegas. Da es sich um eine endotherme Reaktion handelt, muss die notwendige Wärmeenergie durch Wärmeübertragung in die Reaktionskammer eingebracht werden. Die notwendige Wärme wird durch Verbrennung von Kohlenwasserstoffen mit Luft oder Sauerstoff erzeugt.

Eine typische Vorrichtung dieser Art besteht aus einem katenförmigen Ofen, der mit einer Vielzahl von Rohren bestückt ist, welche mit nickelhaltigen Katalysatorpellets gefüllt sind. Am Kopf dieses Ofens befindet sich eine Vielzahl von Brennerdüsen, die zwischen den Rohren angeordnet sind. Um örtliche Überhitzungen zu vermeiden, muss ein großer Abstand von der Brennerflamme zu den Rohren eingehalten werden. Sowohl Rauchgase als auch die zu vergasenden Kohlenwasserstoffe in den Rohren strömen im Gleichstrom von oben nach unten.

Die Vorrichtungen des Standes der Technik erfordern einen großen Platzbedarf und erzeugen stets ein Abgas, das aufwändig von Luftschadstoffen befreit werden muss. Solche Anlagen sind in dicht besiedelten modernen Staaten nur mit hohem Aufwand genehmigungsfähig. Da die Reaktion bei Temperaturen zwischen 820°C und 920°C stattfindet, geht durch das Abgas ein großer Teil der eingebrachten Energie verloren.

US 2005/0229 488 A1 offenbart ein Verfahren zur Herstellung von Synthesegas mittels allothermer Dampfreformierung wobei elektrische Energie mittels einer im Katalysatorbett eingebetteten Heizwicklerstandsspule zugeführt wird.

Der Erfindung liegt die Aufgabe zugrunde, eine abgasfreie Herstellung von Synthesegas in einer kompakten Vorrichtung zu ermöglichen.

Die Aufgabe wird erfindungsgemäß durch ein Verfahren gemäß Anspruch 1 gelöst.

Ferner wird die genannte Aufgabe durch eine Vorrichtung gemäß Anspruch 5 gelöst.

Weitere Durchführungen der Erfindung sind in den Unteransprüchen beschrieben. Wird Elektroenergie in den Prozess eingekoppelt, so geht diese vollständig auf das Synthesegas über. Es geht also keine Energie verloren. Das gilt auch, wenn ein Teil der Elektroenergie in einen Vorreformer eingekoppelt wird, falls die fühlbare Wärme des Synthesegases nicht ausreicht, die Eingangsstoffströme aufzuheizen und den Energiebedarf der endothermen Reaktion zu decken. Vorreformer werden bei 400°C bis 500°C betrieben um höhere Kohlenwasserstoffe in kleine Moleküle zu zerlegen, damit im Hauptreformer keine Rußbildung eintritt. Der Hauptreformer wird vorzugsweise zwischen 820°C und 920°C betrieben. Zur Unterstützung der gewünschten Reaktion werden Vorreformer und Hauptreformer zweckmäßigerweise mit Hilfe von nickelbasierten Katalysatoren betrieben. Die Strömungsrichtung des zu reformierenden Gases ist dabei unerheblich. Dampfreformer dieser Art werden üblicherweise mit Überdruck betrieben, um die nachfolgenden Prozessschritte und die Separierung der verschiedenen Gase zu erleichtern.

Unter gasförmigen Kohlenwasserstoffen können auch verdampfbare Kohlenwasserstoffe verstanden werden.

Wenn der Dampfreformer Teil einer Wasserstoffwirtschaft ist, ist der Druck vorzugsweise mindestens so hoch, dass der Wasserstoff in Mitteldruckleitungen von 16 bar bis 25 bar ohne Nachverdichtung eingespeist werden kann. Vorzugsweise beträgt daher der Betriebsdruck bei der Dampfreformierung wenigstens 16 bar, vorzugsweise zwischen 16 bar und 30 bar, insbesondere zwischen 16 bar und 25 bar.

Falls Sauerstoff preisgünstig zur Verfügung steht, etwa als Abfallprodukt bei der Elektrolyse von Wasser mittels Solarstrom, kann dieser zeitweilig oder anteilig für eine autotherme Betriebsweise genutzt werden. Die direkte Einbringung von Sauerstoff wird aber mit einem höheren CO₂-Anteil im Synthesegas erkauft.

Elektroenergie lässt sich in vielfältiger Weise in den Prozess einkoppeln, beispielsweise durch Mikrowellen, Plasmakonverter und elektrisch beheizte Kontaktflächen. Am einfachsten ist die Erzeugung von heißen Kontaktflächen durch eine elektrische Widerstandsheizung.

Der allothermen Dampfreformierung wird die Energie durch elektrisch beheizte Kontaktflächen zugeführt. Die Wärmeenergie wird dabei über die Kontaktflächen an das zu reformierende Gas und den Katalysator abgegeben. Für diesen Zweck ist eine Vielzahl von geometrischen Anordnungen der Kontaktflächen möglich.

Der Dampfreformer wird erfindungsgemäß als Wirbelschichtreaktor betrieben. Dazu wird das Gemisch aus Gas und Dampf von unten in ein Wirbelbett geleitet, das aus Partikeln mit katalytisch aktivem Material oder aus einer Mischung von katalytisch aktivem Material und inertem Material wie Sand besteht. Die Korngröße der katalytisch aktiven Partikeln kann je nach Dichte zwischen 0,1 mm und 2 cm liegen. Große Partikeln sind aber für eine Wirbelschicht nur geeignet, wenn sie zusammen mit einem inerten, feinkörnigen Material eingesetzt werden und ungefähr dessen Dichte haben. Für Sand liegt die Korngröße vorzugsweise zwischen 0,15 mm und 0,8 mm. Bei ausschließlicher Nutzung katalytisch aktiver Partikeln, liegt die Korngröße in diesem Bereich, falls eine ähnliche Dichte wie bei Quarzsand erreicht wird. Kleine Partikeln sind besonders vorteilhaft, weil sie an den elektrisch beheizten Kontaktflächen eine gute Wärmeableitung ermöglichen.

Um den Abrieb in Grenzen zu halten, sollte die Wirbelschicht als stationäre Wirbelschicht ausgebildet sein. Wegen des außerordentlich hohen Wärmeübergangs zwischen Wirbelschicht und der eingebetteten elektrischen Heizung, ist diese Anordnung außerordentlich kompakt. Diese Anordnung ist um Größenordnungen kleiner als die Vorrichtungen nach dem Stand der Technik. Das würde auch bei höheren Strompreisen, in Verbindung mit dem abgasfreien Betrieb, eine hohe Wirtschaftlichkeit und Effizienz ermöglichen.

Bedarfsweise werden die Kontaktflächen selbst etwa durch Anlegen einer elektrischen Spannung elektrisch beheizt. Die Kontaktflächen sind dann Außenflächen eines elektrischen Widerstands der Widerstandsheizung. Den Kontaktflächen kann bedarfsweise aber auch eine mit diesen in thermisch leitendem Kontakt stehende elektrische Heizung zugeordnet sein. Je nach Ausgestaltung der Kontaktflächen kann die eine oder die andere Alternative bevorzugt sein.

Die Kontaktflächen können durch in die Wirbelschicht eingebrachte Platten, Stäbe und/oder Rohre gebildet sein, wobei bedarfsweise die Platten, Stäbe und/oder Rohre den elektrischen Widerstand einer elektrischen Widerstandsheizung bilden.

Bei einer elektrischen Beheizung ist es leicht möglich, die Leistung den tatsächlichen Erfordernissen des Reaktionsfortschritts anzupassen. Dies kann entweder durch Vorausberechnung oder durch dynamische Veränderungen im Betrieb erfolgen. So kann die Energiezufuhr am Beginn der Reaktionszone größer konzipiert werden als im weiteren Verlauf der Reaktionszone. Auch das Zu- und Abschalten von zusätzlichen Heizregistern kann vorteilhaft sein. Bedarfsweise kann die Energiezufuhr über die Höhe der Wirbelschicht dem tatsächlichen Bedarf angepasst werden. Dies kann sehr einfach etwa dadurch erreicht werden, dass sich der Widerstand der Widerstandsheizung über die Höhe der Wirbelschicht verändert.

Alternativ oder zusätzlich kann die spezifische Kontaktfläche bezogen auf die Höhe bzw. Länge der Katalysatorschüttung entlang der Höhe bzw. Länge der Wirbelschicht variierend ausgebildet sein. Mit anderen Worten kann in Bereichen der Wirbelschicht mit erhöhtem Wärmebedarf eine größere spezifische Kontaktfläche vorgesehen sein als in Bereichen mit geringerem Wärmebedarf. Alternativ oder zusätzlich kann die spezifische Kontaktfläche auch in Bereichen der Wirbelschicht erhöht sein, in denen der Temperaturgradient zwischen den Kontaktflächen und den Katalysatorpellets bzw. Katalysatorpartikeln geringer ist.

Vorzugsweise kann das Synthesegas aus einem methanhaltigen Gas gewonnen werden. Die Herstellung von Synthesegas aus methanhaltigen Gasen stellt letztlich eine effiziente Alternative zur motorischen Verbrennung von methanhaltigen Gasen beispielsweise in sogenannten Blockheizkraftwerken dar. Eine besonders hohe Gesamteffizienz bei der Biomassenutzung kann erreicht werden, wenn das methanhaltige Gas ein Biogas, ein Deponiegas und/oder ein Klärgas ist.

Unter Biogas wird in diesem Zusammenhang ein Gas verstanden, das durch Vergärung von Biomasse in Biogasanlagen hergestellt wird und neben Wasserdampf als Hauptkomponenten Methan und Kohlendioxid (CO₂ aufweist. Deponiegas und Klärgas werden ähnlich wie Biogas bei der als Vergärung oder Faulung bezeichneten anaeroben Zersetzung von Biomasse gewonnen. Die Biomasse ist dabei entweder in eine Deponie eingebracht worden oder bei der Abwasseraufbereitung angefallen.

Bei entsprechenden Rohstoffpreisen kann es alternativ oder zusätzlich besonders kostengünstig sein, wenn das Synthesegas aus Erdgas und/oder Naphtha hergestellt wird.

Es kann vorgesehen sein, dass die kleinen Katalysatorpartikel nickelhaltig sind.

Bedarfsweise kann es hinsichtlich einer besseren Verfahrensführung zweckmäßig sein, die Reformierung teilweise in einem Vorreformer und teilweise in einem Hauptreformer durchzuführen. Dabei kann der Vorreformer oder der Hauptreformer eine Schüttung aus Katalysatorpellets aufweisen. Alternativ oder zusätzlich kann der Vorreformer und/oder der Hauptreformer eine Wirbelschicht aus Katalysatorpartikeln aufweisen. Auf diese Weise kann das Verfahren und die Vorrichtung zur Herstellung von Synthesegas gut auf die jeweils eingesetzten Rohgase abgestimmt werden. Konstruktiv einfach ist es, wenn der Vorreformer und der Hauptreformer die gleichen Wirbelschichten aus den gleichen Katalysatorpartikeln aufweisen.

Zusätzlich können die Kontaktflächen zur direkten oder indirekten Zuführung von elektrischer Energie im Vorreformer und/oder im Hauptreformer vorgesehen sein. Wenn die Kontaktflächen sowohl im Vorreformer und im Hauptreformer vorgesehen sind, können die dort ablaufenden Prozesse sehr gut geregelt werden. Zudem kann der Gesamtprozess sehr effizient gestaltet werden.

Die Kontaktflächen zum Zuführen von Energie zur allothermen Dampfreformierung können im Vorreformer oder im Hauptreformer in einer Schüttung aus Katalysatorpellets angeordnet sein. Alternativ oder zusätzlich können die Kontaktflächen aber auch im Vorreformer und/oder im Hauptreformer in einer Katalysatorpartikel umfassenden Wirbelschicht angeordnet sein. Dabei ist zu berücksichtigen, dass eine Schüttung aus Katalysatorpellets regelmäßig verfahrenstechnisch und apparativ einfacher zu betreiben ist. Allerdings ermöglicht eine Wirbelschicht regelmäßig einen besseren Wärme- und Stoffaustausch.

Der aus Synthesegas hergestellte Wasserstoff aus Biomethan (Biogas) kann Teil einer wärmegeführten solaren Wasserstoffwirtschaft sein. Als zukünftige Ressource wird auch Methan (Biogas) aus Fermentationsprozessen betrachtet.

Die Erfindung wird nachfolgend anhand einer lediglich Ausführungsbeispiele darstellenden Zeichnung näher erläutert.

In der Zeichnung zeigt
- Fig. 1: eine Vorrichtung zur Herstellung von Synthesegas und
- Fig. 2: eine erfindungsgemäße Vorrichtung zur Herstellung von Synthesegas.

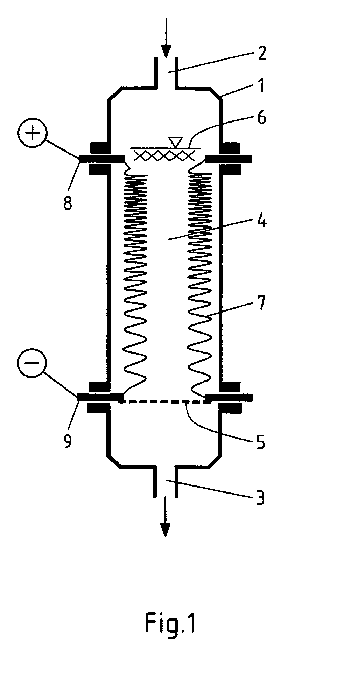

In Fig. 1 ist ein Reaktor 1 zur Durchführung einer endothermen Umsetzung des zu reformierenden Gases dargestellt. Das zu reformierende Gas gelangt durch die Öffnung 2 in eine Schüttung 4 aus Katalysatorpellets. Diese Schüttung 4 wird unten durch ein Sieb 5 gestützt. In der Praxis sind solche Siebe an Lochböden befestigt, die die Last tragen. So ein Lochboden kann zugleich der Minuspol 9 (Erdung) der elektrischen Heizung 7 sein. Die obere Grenze 6 der Schüttung 4 ist im dargestellten Ausführungsbeispiel oberhalb der elektrischen Heizung 7 angeordnet. Oft wird die oberste Lage der Schüttung 4 als inerte Staubfängerschicht ausgebildet. Die Heizung 7 des Reaktors 1 besteht aus einer Vielzahl von Stäben oder Rohren, die hier als Wendeln ausgestaltet sind. Diese Wendeln haben im oberen Bereich engere Windungen als unten. Auf diese Weise kann der erforderliche Energieeintrag dem vorausberechneten Bedarf angepasst werden. Die Stromzuführung 8 kann in der Mitte als Lochscheibe oder Gitter ausgebildet sein. Die Stromzuführung 8 ist gegenüber den Apparateflanschen zu isolieren. Das Synthesegas verlässt den Reaktor 1 durch die Öffnung 3.

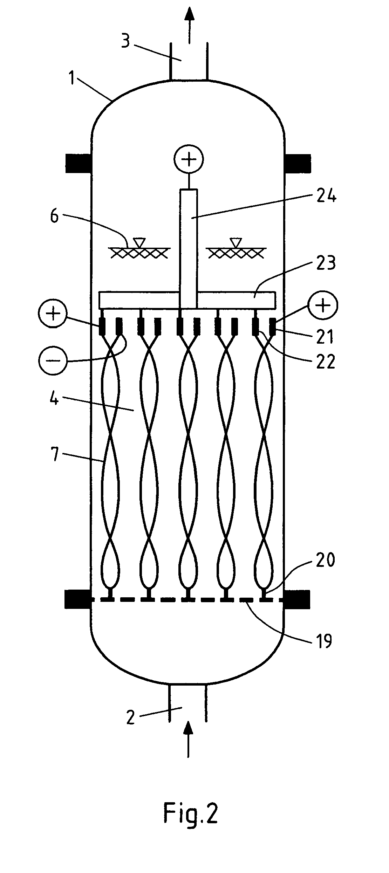

In Fig. 2 ist ein Reaktor 1 dargestellt, der als stationärer Wirbelschichtreaktor ausgebildet ist. Innerhalb der Wirbelschicht 4, die sich vom Düsenboden 19 bis zu einer oberen Grenze 6 ausdehnt, ist eine elektrische Widerstandsheizung 7 angeordnet. Die Widerstandsheizung 7 besteht aus einer Vielzahl von Stäben oder Rohren, die in Kontakt zu den Sammelschienen 21 und 22 stehen und dort auch mechanisch gehalten werden. Die Stäbe bzw. Rohre sind als Schlaufen ausgebildet, die verdreht sind. Dieser Drall sorgt für die Zerstörung von Großblasen in der Wirbelschicht und verbessert die Quervermischung und den Wärmeübergang zu den Kontaktflächen. Zur Sicherung der mechanischen Stabilität können diese Stäbe bzw. Rohre am Düsenboden 19 befestigt werden. Die Befestigung muss isolierend erfolgen, wenn die Stäbe bzw. Rohre selbst die Widerstandsheizung 7 bilden. Die Stromzuführung kann beispielsweise über konzentrisch angeordnete Rohre 24 erfolgen, die voneinander isoliert sein müssen. Diese Rohre 24 bilden zugleich die mechanische Halterung im oberen Bereich. Von den konzentrischen Rohren 24 wird der Strom dann auf Sammelschienen 23 verteilt, die wiederum mit den untergeordneten Sammelschienen 21 oder 22 in Kontakt stehen. Um sicherzustellen, dass keine Überhitzungen auftreten, befindet sich beim dargestellten Reaktor das ganze Heizungssystem innerhalb der Wirbelschicht.

Wenn die als Widerstandsheizung 7 ausgebildeten verdrehten Schlaufen im unteren Bereich aus Werkstoffen mit hohem elektrischem Widerstand und im oberen Bereich aus Werkstoffen mit geringem Widerstand hergestellt sind, muss nur der Bereich der Schlaufen von der Wirbelschicht bedeckt sein, die infolge ihres hohen Widerstandes eine hohe Wärmeleistung abgeben. In diesem Falle sollten die Sammelschienen 21,22,23 ebenfalls aus Material mit geringem Widerstand gefertigt sein. Sammelschienen außerhalb der Wirbelschicht haben weniger Verschleiß. Natürlich kann man die Heizung auch in klassischer Weise mit innen beheizten Rohren ausführen. Das erfordert aber eine aufwändige Konstruktion und eine ständige Spülung der Rohre, damit die Heizwendeln durch eindiffundierten Wasserstoff nicht verspröden. Das in die Öffnung 2 einströmende zu reformierende Gas-Dampfgemisch bildet das Wirbelgas für die Wirbelschicht 4. Das Synthesegas verlässt den Reaktor 1 durch die Öffnung 3.

Die Erfindung ermöglicht eine erhebliche Reduktion der Investitionskosten und eine höhere Effizienz. Angesichts ständig steigender Gesamtwirkungsgrade bei der Erzeugung von Strom und Wärme, ist der Einsatz von Elektroenergie für die Dampfreformierung keine Energieverschwendung, sondern ein Beitrag zur sparsamen Nutzung von Energie.

## Patentansprüche

1. Verfahren zur Herstellung von Synthesegas aus gasförmigen Kohlenwasserstoffen mittels allothermer Dampfreformierung mit Katalysatoren,
- bei dem Energie mindestens teilweise durch elektrische Energie zugeführt wird,
- bei dem die Energie durch elektrisch beheizte Kontaktflächen zugeführt wird und
- bei dem die Energie durch Kontaktflächen innerhalb einer mindestens teilweise aus Katalysatorpartikeln bestehenden Wirbelschicht zugeführt wird.

2. Verfahren nach Anspruch 1,
bei dem die Kontaktflächen durch Anlegen einer elektrischen Spannung direkt beheizt werden.

3. Verfahren nach Anspruch 1 oder 2,
bei dem das Synthesegas aus einem methanhaltigen Gas, vorzugsweise aus einem Biogas, Deponiegas und/oder Klärgas hergestellt wird.

4. Verfahren nach einem der Ansprüche 1 bis 3,
bei dem das Synthesegas aus Erdgas und/oder Naphtha hergestellt wird.

5. Vorrichtung zur Herstellung von Synthesegas aus gasförmigen Kohlenwasserstoffen mittels allothermer Dampfreformierung, vorzugsweise nach einem der Ansprüche 1 bis 5,
- mit Katalysatoren
**dadurch gekennzeichnet,**
- **dass** Mittel zur Zuführung von Energie mindestens teilweise durch elektrische Energie vorgesehen sind,
- **dass** die Mittel zur Zuführung von Energie elektrisch beheizte Kontaktflächen umfassen und
- **dass** die Kontaktflächen innerhalb einer mindestens teilweise aus kleinen Katalysatorpartikeln bestehenden Wirbelschicht angeordnet sind.

6. Vorrichtung nach Anspruch 5,
**dadurch gekennzeichnet,**
**dass** die Kontaktflächen von einem elektrischen Widerstand einer elektrischen Widerstandsheizung gebildet sind.

7. Vorrichtung nach Anspruch 5,
**dadurch gekennzeichnet,**
**dass** die Kontaktflächen durch in die Wirbelschicht eingebrachte Platten, Stäbe und/oder Rohre gebildet sind.

8. Vorrichtung nach Anspruch 7,
**dadurch gekennzeichnet,**
**dass** die Platten, Stäbe und/oder Rohre den elektrischen Widerstand einer elektrischen Widerstandsheizung bilden.

9. Vorrichtung nach einem der Ansprüche 5 bis 8,
**dadurch gekennzeichnet,**
**dass** die kleinen Katalysatorpartikel nickelhaltig sind.

10. Vorrichtung nach einem der Ansprüche 5 bis 8,
**dadurch gekennzeichnet,**
**dass** ein Vorreformer und ein dem Vorreformer nachgeschalteter Hauptreformer vorgesehen sind.

11. Vorrichtung nach Anspruch 10,
**dadurch gekennzeichnet,**
**dass** die Mittel zur Zuführung von Energie Kontaktflächen umfassen die im Vorreformer und/oder im Hauptreformer angeordnet sind.

12. Vorrichtung nach Anspruch 11,
**dadurch gekennzeichnet,**
**dass** die Kontaktflächen im Vorreformer oder im Hauptreformer in einer Schüttung aus Katalysatorpellets angeordnet sind.

13. Vorrichtung nach Anspruch 11 oder 12,
**dadurch gekennzeichnet,**
**dass** die Kontaktflächen im Vorreformer und/oder im Hauptreformer in einer mindestens teilweise aus kleinen Katalysatorpartikeln bestehenden Wirbelschicht angeordnet sind.

## Claims

1. Method for producing synthesis gas from gaseous hydrocarbons by means of allothermal steam reforming using catalysts,
- in which energy is at least partly supplied by means of electrical energy,
- in which the energy is supplied by means of electrically heated contact surfaces and
- in which the energy is supplied by means of contact surfaces within a fluidised bed which at least partly consists of catalyst particles.

2. Method according to Claim 1, in which the contact surfaces are directly heated by applying an electrical voltage.

3. Method according to Claim 1 or 2, in which the synthesis gas is produced from a gas containing methane, preferably from a biogas, landfill gas and/or sewage gas.

4. Method according to any one of Claims 1 to 3, in which the synthesis gas is produced from natural gas and/or naphtha.

5. Apparatus for producing synthesis gas from gaseous hydrocarbons by means of allothermal steam reforming, preferably according to any one of Claims 1 to 5,
- using catalysts,
**characterised**
- **in that** means for supplying energy at least partly by means of electrical energy are provided,
- **in that** the means for supplying energy comprise electrically heated contact surfaces, and
- **in that** the contact surfaces are arranged within a fluidised bed which at least partly consists of small catalyst particles.

6. Apparatus according to Claim 5, **characterised in that** the contact surfaces are formed by an electrical resistor of an electric resistance heater.

7. Apparatus according to Claim 5, **characterised in that** the contact surfaces are formed by plates, rods and/or tubes incorporated into the fluidised bed.

8. Apparatus according to Claim 7, **characterised in that** the plates, rods and/or tubes form the electrical resistor of an electric resistance heater.

9. Apparatus according to any one of Claims 5 to 8, **characterised in that** the small catalyst particles contain nickel.

10. Apparatus according to any one of Claims 5 to 8, **characterised in that** a pre-reformer and a main reformer, downstream from the pre-reformer, are provided.

11. Apparatus according to Claim 10, **characterised in that** the means for supplying energy comprise contact surfaces which are arranged in the pre-reformer and/or in the main reformer.

12. Apparatus according to Claim 11, **characterised in that** the contact surfaces are arranged in a fill consisting of catalyst pellets in the pre-reformer or in the main reformer.

13. Apparatus according to Claim 11 or 12, **characterised in that** the contact surfaces in the pre-reformer and/or in the main reformer are arranged in a fluidised bed which at least partly consists of small catalyst particles.

## Revendications

1. Procédé de production d'un gaz de synthèse à partir d'hydrocarbures gazeux au moyen de réformage allothermique à la vapeur avec des catalyseurs,
- lors duquel de l'énergie est alimentée au moins en partie par de l'énergie électrique,
- lors duquel l'énergie est alimentée par des surfaces de contact chauffées par électricité et
- lors duquel l'énergie est alimentée par des surfaces de contact à l'intérieur d'un lit fluidisé constitué au moins en partie de particules de catalyseur.

2. Procédé selon la revendication 1,
lors duquel les surfaces de contact sont directement chauffées par application d'une tension électrique.

3. Procédé selon la revendication 1 ou 2,
lors duquel le gaz de synthèse est produit à partir d'un gaz contenant du méthane, de préférence à partir d'un biométhane, d'un gaz de décomposition et/ou d'un gaz de curage.

4. Procédé selon l'une quelconque des revendications 1 à 3,
lors duquel le gaz de synthèse est produit à partir de gaz naturel et/ou de naphta.

5. Dispositif de production d'un gaz de synthèse à partir d'hydrocarbures gazeux au moyen de réformage allothermique à la vapeur, de préférence selon l'une quelconque des revendications 1 à 5,
- avec des catalyseurs,
**caractérisé en ce que**
- des moyens pour l'alimentation d'énergie sont prévus au moins en partie par de l'énergie électrique,
- **en ce que** les moyens pour l'alimentation d'énergie comprennent des surfaces de contact chauffées par électricité et
- **en ce que** les surfaces de contact sont disposées à l'intérieur d'un lit fluidisé constitué au moins en partie de petites particules de catalyseur.

6. Dispositif selon la revendication 5,
**caractérisé en ce que**
les surfaces de contact sont formées par une résistance électrique d'un chauffage électrique par résistances.

7. Dispositif selon la revendication 5,
**caractérisé en ce que**
les surfaces de contact sont formées par des plaques, des barres et/ou des tubes introduits dans le lit fluidisé.

8. Dispositif selon la revendication 7,
**caractérisé en ce que**
les plaques, les barres et/ou les tubes forment la résistance électrique d'un chauffage électrique par résistances.

9. Dispositif selon l'une quelconque des revendications 5 à 8,
**caractérisé en ce que**
les petites particules de catalyseur contiennent du nickel.

10. Dispositif selon l'une quelconque des revendications 5 à 8,
**caractérisé en ce qu'**
il est prévu un pré-réformeur et un réformeur principal monté en aval du pré-réformeur.

11. Dispositif selon la revendication 10,
**caractérisé en ce que**
les moyens pour l'alimentation d'énergie comprennent des surfaces de contact qui sont disposées dans le pré-réformeur et/ou dans le réformeur principal.

12. Dispositif selon la revendication 11,
**caractérisé en ce que**
les surfaces de contact dans le pré-réformeur ou dans le réformeur principal sont disposées dans des pellets de catalyseur en vrac.

13. Dispositif selon la revendication 11 ou 12,
**caractérisé en ce que**
les surfaces de contact dans le pré-réformeur et/ou dans le réformeur principal sont disposées dans un lit fluidisé constitué au moins en partie de petites particules de catalyseur.
